(19) Europäisches Patentamt
European Patent Office
Office européen des brevets

(11) EP 0 556 157 B1

(12) **EUROPÄISCHE PATENTSCHRIFT**

(45) Veröffentlichungstag und Bekanntmachung des Hinweises auf die Patenterteilung:
**26.11.1997 Patentblatt 1997/48**

(51) Int. Cl.[6]: **A01N 43/54**
// (A01N43/653, 43:54),
(A01N55/00, 43:54)

(21) Anmeldenummer: **93810071.6**

(22) Anmeldetag: **04.02.1993**

(54) **Fungizide Mischungen auf der Basis von Triazol-Fungiziden und 4,6-Dimethyl-N-Phenyl-2-Pyrimidinamin**

Fungicidal mixtures based on triazole fungicides and 4,6-dimethyl-N-phenyl-2-pyrimidinamine

Mélanges fongicides à base de fongicides triazoliques et de 4,6-diméthyl-N-phenyl-2-pyrimidinamine

(84) Benannte Vertragsstaaten:
**AT BE CH DE DK ES FR GB IE IT LI NL**

(30) Priorität: **13.02.1992 CH 427/92**

(43) Veröffentlichungstag der Anmeldung:
**18.08.1993 Patentblatt 1993/33**

(73) Patentinhaber: **Novartis AG**
**4058 Basel (CH)**

(72) Erfinder:
- **Hubele, Adolf, Dr.**
  **CH-4312 Magden (CH)**
- **Zeun, Ronald, Dr.**
  **W-7844 Neuenburg (DE)**

(56) Entgegenhaltungen:
**EP-A- 0 238 943** **DD-A- 151 404**
**DE-A- 3 715 705** **FR-A- 2 516 349**

Bemerkungen:
Die Akte enthält technische Angaben, die nach dem Eingang der Anmeldung eingereicht wurden und die nicht in dieser Patentschrift enthalten sind.

EP 0 556 157 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft fungizide Zweikomponenten-Gemische mit synergistisch gesteigerter Wirkung und Verfahren zur Anwendung solcher Gemische im Pflanzenschutz.

Die Komponente I ist ein Ergosterin-Biosynthese-Hemmer der Triazol-Reihe oder eines ihrer Salze oder Metallkomplexe, ausgewählt aus

A) 1-[2-(2,4-Dichlorphenyl)-4-propyl-1,3-dioxolan-2-ylmethyl]-1H-1,2,4-triazol, Handelsname Propiconazol, (Referenz: GB-1,522,657);

B) 1-{2-[2-Chlor-4-(4-chlorphenoxy)-phenyl]-4-methyl-1,3-dioxolan-2-ylmethyl}-1H-1,2,4-triazol, Handelsname Difenoconazol, (Referenz: GB-2,098,607);

C) α-[2-(4-Chlorphenyl)ethyl]-α-(1,1-dimethylethyl)-1H-1,2,4-triazol-1-ethanol, Handelsname Tebuconazol, (Referenz: EP-A-40 345);

D) 1-(4-Chlorphenoxy)-3,3-dimethyl-1-(1,2,4-triazol-1-yl)-butan-2-ol, Handelsname Triadimenol, (Referenz: DE-OS 23 24 010);

E) 1-[3-(2-Chlorphenyl)-2-(4-fluorphenyl)oxiran-2-ylmethyl]-1H-1,2,4-triazol, Code-Bezeichnung BAS-480-F, (Referenz EP-A-196 038);

F) α-(4-Chlorphenyl)-α-(1-cyclopropylethyl)-1H-1,2,4-triazol-1-ethanol, Handelsname Cyproconazol (Referenz: US-4,664,696);

G) 4-(4-Chlorphenyl)-2-phenyl-2-(1,2,4-triazol-1-ylmethyl)-butyronitril, vorgeschlagener Handelsname Fenbuconazol (Referenz: EP-A-251 775);

H) α-(2-Fluorophenyl)-α-(4-fluorophenyl)-1H-1,2,4-triazol-1-ethanol, Handelsname Flutriafol (Referenz: EP-A-15 756);

J) α-Butyl-α-(2,4-dichlorphenyl)-1H-1,2,4-triazol-1-ethanol, Handelsname Hexaconazol (Referenz: GB-2,119,653); und

K) 1-{[Bis(4-fluorophenyl)methylsilyl]methyl}-1H-1,2,4-triazol, Handelsname Flusilazol (Referenz: US-4,510,136).

Die Komponente II ist das 2-Anilinopyrimidin der Formel

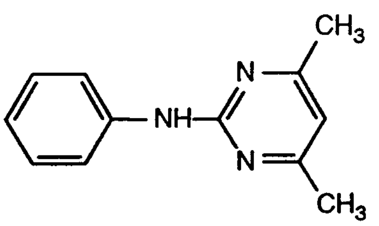

II

4,6-Dimethyl-N-phenyl-2-pyrimidinamin, vorgeschlagener Handelsname Pyrimethanil, oder eines seiner Salze oder seiner Metallkomplexe (Referenz: DD-151 404).

Unter den Säuren, die zur Herstellung von Salzen der Formel I oder II verwendet werden können, sind zu nennen:

Halogenwasserstoffsäure wie Fluorwasserstoffsäure, Chlorwasserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der beiden basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4.Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten, wie etwa bei den vorerwähnten Mischkomplexen aus Triazolkomponente I und Anilinopyrimidin II.

Die Triazol-Komponenten I können in stereoisomeren Formen oder als Racemate vorliegen. Während die Komponenten IC und IG bis IJ zwei Stereoisomere bilden können, sind für die übrigen Komponenten IA (Propiconazol), IB (Difenoconazol), ID (Triadimenol), IE (BAS-480-F) und IF (Cyproconazol) jeweils vier Stereoisomere möglich. Die verschiedenen stereoisomeren Formen eines der Präparate können unterschiedliche fungizide Wirkung haben. Beim Propiconazol beispielsweise sind die beiden cis-Isomeren bevorzugt, d.h. jene Enantiomeren, bei denen die Triazolylmethylgruppe und die Propylgruppe auf der gleichen Seite des Dioxolanrings stehen. Beim BAS-480-F sind die beiden Z (=cis)-Isomere bevorzugt.

In der Praxis kann man vorteilhaft die Wirkstoffe I und II als freie Basen und in der Racematform einsetzen, denen man auch weitere agrarchemische Aktivsubstanzen wie Insektizide, Akarizide, Nematizide, Herbizide, Wuchsregulatoren und Düngemittel, insbesondere aber weitere Mikrobizide, zufügen kann.

In den letzten Jahren sind sogenannte Ergosterin-Biosynthese-Hemmer in verstärktem Masse auf den Markt gekommen, d.h. Präparate, deren Fungizid-Wirkung darauf beruht, die Biosynthese des in der Zellmembran von Pilzen vorkommenden Ergosterins zu hindern. Fungizide, die im Molekül einen 1H-1,2,4-Triazolrest enthalten, wirken in der Regel bei diesem Vorgang als 14-C Demethylierungshemmer (= DMI). Der jahrelange Einsatz von Präparaten auf Triazol-Basis hat allerdings stellenweise schon zum Auftreten von Pilzstämmen mit nachweislich reduzierter Sensitivität geführt

In FR 2 516 349 werden daher Mischungen von Triazol-Fungiziden mit 2-Amino-pyrimidin-Fungiziden zur Pilzbekämpfung vorgeschlagen.

Es hat sich nun überraschenderweise gezeigt, dass Mischungen von Triazol-Fungiziden und insbesondere die der Komponenten I mit dem Anilinopyrimidin II in ihrer fungiziden Wirkung nicht nur additive Wirkung, sondern deutliche synergistisch gesteigert Wirkung auch bei Pilz-Isolaten entfalten, die eine reduzierte Sensitivität auf Triazol-Fungizide erworben haben.

Die vorliegende Erfindung stellt daher eine ganz wesentliche Bereicherung der Technik dar.

Gegenstand der vorliegenden Erfindung ist neben dem Zweikomponenten-Gemisch auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) einer der Komponenten I oder einem seiner (Metall) Salze und mit b) dem Wirkstoff der Formel II oder einem seiner Salze, wobei die Salze auch so gewählt sein können, dass beide Wirkstoffe an einem Säurerest oder, im Falle eines Metallkomplexes, an ein zentrales Metall-Kation gebunden sind.

Günstige Mischungsverhältnisse der beiden Wirkstoffe sind I:II = 7:1 bis 1:30, bevorzugt I:II = 4:1 bis 1:10. In vielen Fällen sind Mischungen vorteilhaft, bei denen das Mischungsverhältnis der reinen Aktivsubstanzen I:II = 1:2 bis 1:10 beträgt, z.B. 1:3, 1:5, oder 1:8.

Die erfindungsgemässen Wirkstoffmischungen I+II besitzen sehr vorteilhafte kurative, präventive und systemische Fungizid-Eigenschaften zum Schutz von Kulturpflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Dies trifft insbesondere auch auf Mikroorganismen zu, die gegen Fungizide aus der Triazol-Klasse reduzierte Sensitivität entwickelt haben.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattung Hemileia, Rhizoctonia, Puccinia); Fungi imperfecti (z.B. Botrytis, Helminthosporium, Rhynchosporium, Fusarium, Septoria, Cercospora, Alternaria, Pyricularia und insbesondere Pseudocercosporella herpotrichoides). Die Wirkstoffgemische wirken systemisch. Sie können auch als Beizmittel zur Behandlung von Saatgut (Früchte, Knollen, Körner) und Pflanzenstecklinge zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch ihre Umweltfreundlichkeit aus.

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erdbeeren, Himbeeren und Brombeeren); Hülsenfrüchte: (Bohnen, Linsen, Erbsen, Soja); Oekulturen: (Raps, Senf, Mohn, Oliven, Sonnenblumen, Kokos, Rizinus, Kakao, Erdnüsse); Gurkengewächse: (Kürbis, Gurken, Melonen); Fasergewächse:

(Baumwolle, Flachs, Hanf, Jute); Citrusfrüchte: (Orangen, Zitronen, Grapefruit, Mandarinen); Gemüsesorten (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffe, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Die Wirkstoff-Gemische der Formeln I und II werden üblicherweise in Form von Zusammensetzungen verwendet. Die Wirkstoffe der Formel I und der Wirkstoff der Formel II können gleichzeitig, können aber auch nacheinander am selben Tage auf die zu behandelnde Fläche oder Pflanze gegeben werden, zusammen mit gegebenenfalls weiteren in der Formulierungstechnik üblichen Trägerstoffen, Tensiden oder anderen applikations fördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Die Verbindungen der Formeln I und II können auch auf Samenkörner aufgebracht werden (Coating), indem man die Körner entweder nacheinander in einer flüssigen Zubereitung eines Wirkstoffs tränkt oder sie mit einer bereits kombinierten feuchten oder trockenen Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 150 g bis 3 kg AS/ha, insbesondere bei 200 g bis 2 kg AS/ha, besonders bevorzugt bei 400 g bis 1,5 kg AS/ha.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethylether oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehl verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als obeflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:

- "Mc Cutcheon's Detergents and Emulsifiers Annual" MC Publishing Corp., Glen Rock, New Jersey, 1988.
- M. and J. Ash, "Encyclopedia of Surfactants", Vol. I-III, Chemical Publishing Co., New York, 1980-1981.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95 % Wirkstoffe der Formeln I und II, 99,9 bis 1 % insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus Verbindung I und Verbindung II in einem bestimmten Mischungs-Verhältnis bedeutet.

| Spritzpulver | a) | b) | c) |
|---|---|---|---|
| Wirkstoff [I:II = 1:3(a), 1:5(b), 1:8(c)] | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 2:5) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4% |
| Cyclohexanon | 30 % |
| Xylolgemisch | 50 % |

Aus diesem Konzentrat können durch Verdünnen mit Wasser Emulsionen jeder gewünschten Verdünnung hergestellt werden, die sich im Pflanzenschutz, einsetzen lassen.

| Stäubemittel | a) | b) | c) |
|---|---|---|---|
| Wirkstoff [I:II = 1:5 (a); 5:7 (b) und 1:2 (c)] | 5 % | 6 % | 4 % |
| Talkum | 95 % | - | - |
| Kaolin | - | 94 % | - |
| Gesteinsmehl | - | - | 96 % |

Man erhält anwendungsfertige Stäubemittel, indem der Wirkstoff mit dem Träger vermischt und auf einer geeigneten Mühle vermahlen wird. Solche Pulver lassen sich auch zur Trockenbeize für Saatgut verwenden.

| Extruder Granulat | |
|---|---|
| Wirkstoff (I:II = 2:3) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 2:5) | 8 % |
| Polyethylenglycol (MG 200) | 3 % |
| Kaolin (MG = Molekulargewicht) | 89 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:II = 2:7) | 36 % |
| Propylenglycol | 10 % |
| Nonylphenolpolyethylenglykolether (15 Mol Et-oxid) | 10 % |
| Na-Ligninsulfonat | 10 % |
| Carboxymethylcellulose | 1 % |
| Silikonöl (in Form 75%ig. wässriger Emulsion) | 1 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliches Vermehrungsgut durch Besprühen, Begiessen oder Eintauchen behandeln und vor Mikoorganismen-Befall schützen.

<u>Biologische Beispiele</u>

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel und kann wie folgt berechnet werden, (COLBY, LR. "Calculating synergistic and antagonistic responses of herbicide combination". Weeds 15, Seiten 20-22.2) (LIMPEL and al., 1062 "Weeds control by... certain combinations". Proc. NEWCL, Vol. 16, pp. 48-53):
(g AS/ha = Gramm Aktivsubstanz je Hektar)

X = % Wirkung durch Fungizid I bei p g AS/ha
Y = % Wirkung durch Fungizid II bei q g AS/ha

E = die erwartete Wirkung der Fungizide I+II bei p+q g AS/ha Aufwandmenge (additive Wirkung),

dann ist nach Colby: $E = X+Y-(X \cdot Y)/100$

Wenn die tatsächlich beobachtete Wirkung (O) grösser ist als die erwartete, so ist die Kombination in ihrer Wirkung überadditiv, d.h. es liegt ein synergistischer Effekt vor.

Wirkung gegen "Echten Mehltau" auf Winterweizen

Methode:

In Töpfen von 16 cm Durchmesser werden im Gewächshaus ca. 20 Pflanzen der Winterweizensorte "Bernina" bei 20°C und 60 % relativer Luftfeuchte während 12 Std. Tag bzw. bei 16°C und 80 % relativer Luftfeuchte während der Nacht herangezogen. Zu Beginn der Bestockung (EC 21) werden die Pflanzen mit einem Isolat von Erysiphe graminis f.sp. tritici inokuliert, das eine reduzierte Sensitivität gegen DMI-Fungizide aufweist.

3 Tage nach der Inokulation wird der Einzelwirkstoff bzw. das Fungizid-Gemisch als wässrige Suspension mit einem Spritzbalken unter Feldbedingungen mit einer Wasseraufwandmenge von 500 1/ha appliziert. 4 Tage bzw. 11 Tage nach der Applikation wird die Veränderung des Befalls auf der bei der Inokulation vorhandenen Blattfläche bestimmt (Auswertung des Primärbefalls). Jeder der Versuche läuft in 3 Wiederholungen.

Dabei tritt bei unterschiedlichen Mischungsverhältnissen einer der Komponenten IA bis IK mit der Komponente II eine synergistisch gesteigerte Fungizid-Wirkung auf.

Diese Wirkungssteigerungen werden nicht nur gegen echte Mehltau-Arten, sondern auch gegen Rost- und Schorfkrankheiten, Halmbruch, Blattflecken (z.B Septoria oder Netzfleckenarten), Grauschimmelfäule und andere Pathogene erzielt.

Bevorzugte Mischungsverhältnisse (in Gewichtsmengen) sind:

| | |
|---|---|
| IA:II = 5:1 bis 1:30 | IF : II = 5:1 bis 1:20 |
| IB : II = 3:1 bis 1:11 | IG : II = 3:1 bis 1:12 |
| IC : II = 3:1 bis 1:8 | IH : II = 3:1 bis 1:15 |
| ID : II = 7:1 bis 1:12 | IJ : II = 5:1 bis 1:24 |
| IE : II = 4:1 bis 1:30 | IK : II = 2:1 bis 1:14. |

**Patentansprüche**

**1.** Fungizides Zweikomponenten-Mittel in einem eine synergistische Wirkung erzeugenden Mengenverhältnis auf der Basis eines Ergosterin-Biosynthese-Hemmers der Triazol-Reihe als Komponente I und eines 2-Anilinopyrimidin-Derivats als Komponente II, dadurch gekennzeichnet, dass die Komponente I ausgewählt ist aus

A) 1-[2-(2,4-Dichlorphenyl)-4-propyl-1,3-dioxolan-2-ylmethyl]-1H-1,2,4-triazol;

B) 1-{2-[2-Chlor-4-(4-chlorphenoxy)-phenyl]-4-methyl-1,3-dioxolan-2-ylmethyl}-1H-1,2,4-triazol;

C) α-[2-(4-Chlorphenyl)ethyl]-α-(1,1-dimethylethyl)-1H-1,2,4-triazol-1-ethanol;

D) 1-(4-Chlorphenoxy)-3,3-dimethyl-1-(1,2,4-triazol-1-yl)butan-2-ol;

E) 1-[3-(2-Chlorphenyl)-2-(4-fluorphenyl)oxiran-2-ylmethyl]-1H-1,2,4-triazol;

F) α-(4-Chlorphenyl)-α-(1-cyclopropylethyl)-1H-1,2,4-triazol-1-ethanol;

G) 4-(4-Chlorphenyl)-2-phenyl-2-(1,2,4-triazol-1-ylmethyl)-butyronitril;

H) α-(2-Fluorophenyl)-α-(4-fluorophenyl)-1H-1,2,4-triazol-1-ethanol;

J) α-Butyl-α-(2,4-dichlorphenyl)-1H-1,2,4-triazol-1-ethanol; und

K) 1-{[Bis(4-fluorophenyl)methylsilyl]methyl}-1H-1,2,4-triazol;

oder jeweils einem ihrer Salze oder Metallkomplexe; und dass die Komponente II 4,6-Dimethyl-N-phenyl-2-pyrimidinamin der Formel

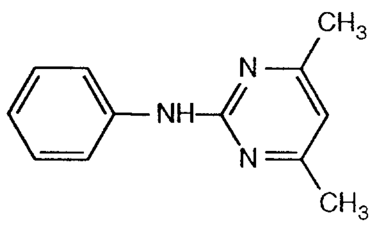

II

oder eines seiner Salze oder Metallkomplexe ist, zusammen mit einem geeigneten Trägermaterial.

2. Mittel nach Anspruch 1, dadurch gekennzeichnet, dass das Gewichtsverhältnis I:II = 7:1 bis 1:30 beträgt.

3. Mittel nach Anspruch 2, dadurch gekennzeichnet, dass das Gewichtsverhältnis I:II = 4:1 bis 1:10 beträgt.

4. Mittel nach Anspruch 3, dadurch gekennzeichnet, dass das Gewichtsverhältnis I:II = 1:2 bis 1:10 beträgt.

5. Mittel gemäss Anspruch 1, wobei als Komponente I Propiconazol, IA, verwendet wird.

6. Mittel gemäss Anspruch 1, wobei als Komponente I Difenoconazol, IB, verwendet wird.

7. Verwendung einer Wirkstoffkombination gemäss Anspruch 1 zur Bekämpfung von Pilzen oder zur Verhütung von Pilzbefall.

8. Verfahren zur Bekämpfung von Pilzen oder zur Verhütung von Pilzbefall, dadurch gekennzeichnet, dass man in beliebiger Reihenfolge oder gleichzeitig eine durch Pilze befallene oder gefährdete Stehe der Pflanze oder den Ort ihres Wachstums mit einer Komponente I und der Komponente II in einem eine synergistische Wirkung erzeugenden Mengenverhältnis gemäss Anspruch 1 behandelt.

9. Verfahren gemäss Anspruch 8, wobei die Komponente IA, Propiconazol, eingesetzt wird.

10. Verfahren gemäss Anspruch 8, wobei die Komponente IB, Difenoconazol, eingesetzt wird.

11. Verfahren gemäss den Ansprüchen 8-10, dadurch gekennzeichnet, dass das Saatgut behandelt wird.

## Claims

1. A fungicidal two-component composition, the components being in a quantity ratio that produces a synergistic effect, based on an ergosterol-biosynthesis inhibitor of the triazole series as component I and a 2-anilinopyrimidine derivative as component II, wherein component I is selected from

A) 1-[2-(2,4-dichlorophenyl)-4-propyl-1,3-dioxolan-2-ylmethyl]-1H-1,2,4-triazole;

B) 1-{2-[2-chloro-4-(4-chlorophenoxy)phenyl]-4-methyl-1,3-dioxolan-2-ylmethyl}-1H-1,2,4-triazole;

C) α-[2-(4-chlorophenyl)ethyl]-α-(1,1-dimethylethyl)-1H-1,2,4-thazol-1-ethanol;

D) 1-(4-chlorophenoxy)-3,3-dimethyl-1-(1,2,4-triazol-1-yl)butan-2-ol;

E) 1-[3-(2-chlorophenyl)-2-(4-fluorophenyl)oxilan-2-ylmethyl]-1H-1,2,4-thazole;

F) α-(4-chlorophenyl)-α-(1-cyclopropylethyl)-1H-1,2,4-triazol-1-ethanol;

G) 4-(4-chlorophenyl)-2-phenyl-2-(1,2,4-thazol-1-ylmethyl)butyronitrile;

H) α-(2-fluorophenyl)-α-(4-fluorophenyl)-1H-1,2,4-triazol-1-ethanol;

J) α-butyl-α-(2,4-dichlorophenyl)-1H-1,2,4-triazol-1-ethanol; and

K) 1-{[bis(4-fluorophenyl)methylsilyl]methyl}-1H-1,2,4-triazole;

or, in each case, a salt or metal complex thereof; and component II is 4,6-dimethyl-N-phenyl-2-pyrimidinamine of formula

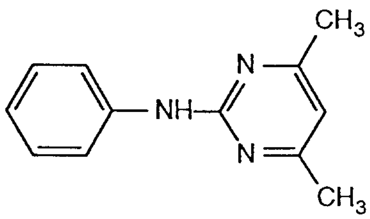

II

or a salt or metal complex thereof, together with a suitable carrier.

**2.** A composition according to claim 1, wherein the ratio by weight of I:II = 7:1 to 1:30.

**3.** A composition according to claim 2, wherein the ratio by weight of I:II = 4:1 to 1:10.

**4.** A composition according to claim 3, wherein the ratio by weight of I:II = 1:2 to 1:10.

**5.** A composition according to claim 1, wherein propiconazol, IA, is used as component I.

**6.** A composition according to claim 1, wherein difenoconazol, IB, is used as component I.

**7.** The use of an active ingredient combination according to claim 1 for controlling fungi or for preventing fungus infestation.

**8.** A method of controlling fungi or of preventing fungus infestation, wherein a site, on a plant, that has been infested with fungi or is in danger of being so infested or the locus of a plant's growth is treated in any sequence or simultaneously with a component I and a component II, being in a quantity ratio that produces a synergistic effect, according to claim 1.

**9.** A method according to claim 8, wherein component IA, propiconazol, is used.

**10.** A method according to claim 8, wherein component IB, difenoconazol, is used.

**11.** A method according to claims 8 to 10, wherein the seed is treated.

## Revendications

**1.** Produit fongicide à deux composants dans des proportions relatives conduisant à une activité synergétique, à base d'un inhibiteur de la biosynthèse de l'ergostérol appartenant à la série triazolique, constituant le composant I, et d'un dérivé de la 2-anilinopyrimidine constituant le composant II, caractérisé en ce que le composant I est choisi parni les suivants :

A) 1- [2- (2,4-dichlorophényl)-4-propyl-1,3-dioxolan-2-ylméthyl]-1H-1,2,4-triazole, nom commercial Propiconazol, (Référence : GB-1 522 657) ;
B) 1-{2-[2-chlorophénoxy)-phényl]-4-méthyl-1,3-dioxolan-2-ylméthyl}-1H-1,2,4-triazole, nom commercial Difenoconazol, (Référence : GB-2 098 607) :

C) α-[2-(4-chlorophényl]-α-(1,1-diméthyléthyl)-1H-1,2,4-triazol-1-éthanol, nom commercial Tebuconazol, (Référence : EP-A-40 345) ;

D) 1-(4-chlorophénony)-3,3-diméthyl-1-(1,2,4-triazol-1-yl)-butan-2-ol, nom commercial Triadimenol, (Référence : DE-OS 23 24 010) ;

E) 1-[3-(2-chlorophényl)-2-(4-fluorophényl)oxiran-2-ylméthyl]-1H-1,2,4-triazole, nom commercial BAS-480-F, (Référence : EP-A-196 038) :

F) α-(4-chlorophényl]-α-(1-cyclopropyléthyl)-1H-1,2,4-triazol-1-éthanol, non commercial Cyproconazol, (Référence : US-4 664 696) ;

G) 4-(4-chlorophényl)-2-phényl-2-(1,2,4-triazol-1-ylméthyl)-butyronitrile, non commercial proposé : Fenbuconazol, (Référence : EP-A-251 775) ;

H) α-(2-fluorophényl]-α-(4-fluorophényl)-1H-1,2,4-triazol-1-éthanol, non commercial Flutriafol, (Référence : EP-A-15 756) ;

I) α-butyl-α-(2,4-dichlorophényl)-1H-1,2,4-triazol-1-éthanol, non commercial Hexaconazol (Référence : GB-2 119 653) ; et

J) 1-{[bis-fluorophényl)méthylsilyl]méthyl}-1H-1,2,4-triazole, non commercial Flusilazol, (Référence : US-4 510 136)

ou leurs sels et complexes métalliques ; et le composant II est la 4,6-diméthyl-N-phényl-2-pyrimidinamine de formule

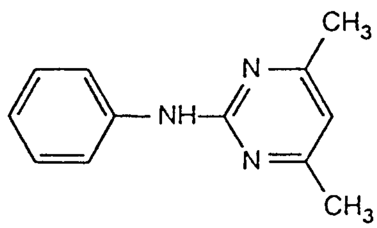

II

ou l'un de ses sels ou complexes métalliques,
avec un véhicule approprié.

**2.** Produit selon revendication 1, caractérisé en ce que les proportions relatives en poids I:II vont de 7:1 à 1:30.

**3.** Produit selon revendication 2, caractérisé en ce que les proportions relatives en poids I:II vont de 4:1 à 1:10.

**4.** Produit selon revendication 3, caractérisé en ce que les proportions relatives en poids I:II vont de 1:2 à 1:10.

**5.** Produit selon revendication 1 pour lequel on utilise en tant que composant I le Propiconazol IA.

**6.** Produit selon revendication 1 pour lequel on utilise en tant que composant I le Difenoconazol IB.

**7.** Utilisation d'une combinaison de substances actives selon revendication 1 pour la lutte contre les mycètes ou pour la protection contre une attaque par les mycètes.

**8.** Procédé pour combattre les mycètes ou pour protéger contre une attaque par les mycètes, caractérisé en ce que l'on traite la plante attaquée par les mycètes ou menacée d'une attaque par les mycètes ou le lieu de sa croissance par un composant I et un composant II selon revendication 1, dans des proportions relatives conduisant à une activité synergétique, et simultanément ou dans un ordre quelconque.

**9.** Procédé selon revendication 8, caractérisé en ce que l'on utilise le composant IA Propiconazol.

**10.** Procédé selon revendication 8, dans lequel on utilise le composant IB Difénoconazol.

**11.** Procédé selon les revendications 8 à 10, caractérisé en ce que l'on traite des semences.